# EUROPEAN PATENT SPECIFICATION

(11) **EP 1 815 313 B1**
(45) Date of publication and mention of the grant of the patent: **24.06.2015**
(21) Application number: 04791062.5
(22) Date of filing: 29.10.2004
(51) Int. Cl.: G06F 3/048

(54) **A HAND-HELD ELECTRONIC APPLIANCE AND METHOD OF DISPLAYING A TOOL-TIP**
TRAGBARES ELEKTRONISCHES GERÄT UND VERFAHREN ZUM ANZEIGEN EINER KURZINFO
APPAREIL ELECTRONIQUE PORTABLE ET PROCEDE D'AFFICHAGE D'UNE INFOBULLE

(43) Date of publication of application: 08.08.2007
(73) Proprietor: Wacom Corporation Limited, Saitama 349-1148 (JP)
(72) Inventor: SCHOLEY, Ian, Wacom Components Europe Ltd., Cambridge CB4 0WG (GB); STAINES, Justin, Wacom Components Europe Ltd., Cambridge CB4 0WG (GB); FERGUSON, Neil, Wacom Components Europe Ltd., Cambridge CB4 0WG (GB); PRUSS, Alexander, Wacom Europe GmbH, 47807 Krefeld (DE)
(74) Representative: Richardt Patentanwälte PartG mbB
(86) International application number: PCT/EP2004/012306
(87) International publication number: WO 2006/048028

(56) References cited:
- US-A- 5 347 295
- US-A- 5 617 117
- US-A1- 2004 160 427

## Description

### Field of the invention

The present invention relates to the field of hand-held electronic appliances, such as mobile phones, smartphones, personal digital assistants (PDA), navigation systems, electronic cameras, digital photo viewers and multipurpose hand-held electronic appliances.

### Background and prior art

Various hand-held electronic appliances which include an entry pen for a user's entry of commands or data are known from the prior art. For example, US Patent Number 6,667,740B2 shows a hand-held personal digital assistant (PDA) which includes an xy digitising system behind the PDA's liquid crystal display which can sense the xy position of a resonant stylus. Further, a mobile telephone is disclosed that has a liquid crystal display, and sensor windings and excitation windings of a digitising system under the display. The digitising system is operable to sense the position of a resonant stylus relative to the display. The digitising system of the mobile telephone may be used to allow a user to create short text messages which can then be sent by the mobile telephone to another party. If the mobile telephone includes an organiser, then the digitiser can be used to control the inputting, manipulation and outputting of data from the organiser.

In order to facilitate a user's interaction some hand-held electronic appliances have a graphical user interface for a user's selections of icons of the graphical user interface by means of an entry pen. Such prior art hand-held electronic appliances have resistive interfaces that require that the entry pen is pressed against the surface of the display for a user's interaction. Examples for such prior art hand-held electronic appliances include PDAs that are commercially available from PalmOne (www.palm1.com).

US Patent Number 6, 664,991 shows a user interface for a pen-based device that allows users to activate the full "card" for an entry using a single tap whilst also giving the user the ability to reach a menu of context dependent commands using a simple gesture. The gesture consists of pressing and holding the stylus on a selection for a system-specified length of time. If the user does not move the stylus more than a system-specified distance from the original location for that time, a context menu gesture is recognised and the application displays a context menu. Alternatively, pressing and holding an external button on the pen-based device while an entry is highlighted is considered a context menu gesture. As a further alternative double tapping the stylus or pressing and holding an external button whilst tapping the stylus are considered context menu gestures.

Further, graphical user interfaces for personal computers are known that provide so-called tool-tips. A 'tool-tip' is a short textual label that appears over an icon or control area in the graphical user interface to provide a brief indication of the function associated with the icon. Tool-tips most commonly are associated with icons appearing in a 'tool bar', i.e. a group of icons that each provides a unique graphical image representing a particular function of a computer program. For example, the tool-tip typically appears on a computer display when a user of the computer places a cursor over an icon in a tool bar for a predetermined period of time, known as the 'tool-tip trigger interval'. This time interval is typically about one half second.

The tool-tip usually consists of a small textbox containing a very short, e.g. one to four words, description of the function associated with the selected icon. When the user enters the selection of the icon with a mouse click, the corresponding function of the computer program is invoked.

In some applications, the tool-tip disappears if, after some predetermined amount of time, known as the 'tool-tip timeout interval', the user has not entered a selection of the icon, moved the mouse, or taken some other prescribed action. US5,995,101 shows an improved multi-level tool-tip for a graphical user interface for use in a graphical display on a computer monitor.

US 2004/0160427 A1 does disclose a notepad computer with a page display region displaying a page of a document on which a user can write using a pen or a stylus type writing tool. A selection of an element displayed on the display of the notepad can be performed by holding the pen near the displayed element. In a further embodiment, a selection can be started explicitly by tapping a selected icon.

### Summary of the invention

In accordance with the invention there is provided a hand-held electronic appliance according to claim 1.

The pen entry means for contactless selection can be implemented using capacitive and / or inductive position sensing technologies. Such contactless position sensing technologies are as such known from the prior art (e.g. EP 0 259 894 B1 ,EP 0307667 B1; US 6,485,306 B1; US 5,600,105; US 6,667,740 B2; US 5,488,204; US 5,942,733 and US 6,380,929).

The present invention is particularly advantageous as it facilitates a user's interaction with the hand-held electronic appliance. The user can select an icon without contacting the surface of the display which makes the user's interaction much more convenient. For example, the user can move an entry pen over the display while there is a gap between the surface of the display and the entry pen for convenient selection of one of the icons of the graphical user interface.

In other words, the user can select an icon of the graphical user interface by pointing towards the icon with the entry pen without a need for touching the surface of the display with the pen tip. In response to the user's selection of one of the icons the tool-tip associated with that icon is displayed automatically.

Alternatively the tool-tip is displayed when the user performs an additional single user entry action, such as depressing the entry pen against the display on the location where the selected icon is displayed or operating the side switch of the entry pen. Alternatively performing the single user entry action, when one of the icons is selected, invokes a program function that is associated with the selected icon, such as a communication function, organizer function, digital camera function, navigation function, a digital photo viewer function or another function that is provided by the hand-held electronic appliance. As a further alternative a context menu is associated with the selected icon. In response to the user's selection of the icon, the context menu is displayed automatically, for the user's selection of one of the menu items and/or sub-menus of the context menu.

For entry of a menu item selection into the hand-held electronic appliance the user needs to perform an additional user entry action. For example, this entry can be performed by depressing the pen tip of the entry pen onto the surface of the display or by operating a switch of the entry pen. In the latter case both the selection of the menu item and entry of the selection can be performed without contacting the surface of the display with the entry pen.

In accordance with an example at least one of the menu items of the context menu has an assigned context sub-menu. The graphical user interface displays the sub-menu in response to a contactless selection of the menu item to which the sub-menu is assigned.

In accordance with an example the graphical user interface comprises an icon that represents the context menu. When the icon is selected by means of the entry pen, the context menu that is represented by the icon is displayed for the user's selection of the menu item.

Preferably, the graphical user interface comprises a number of context menus. The context menus provide selectable choices or options to a user in a stack of panes, with one choice being provided per pane. Each pane carries one menu item. The context menus are relatively small, with typically only a word or two of text being provided in each pane. Preferably, the context menus are categorised. For example, there is one context menu for entering and / or viewing user settings, a context menu for communication functions, a context menu for organiser functions, a context menu for navigation functions, a context menu for digital camera functions and / or for other functionalities of the hand-held electronic appliance. Each of the context menus can have one or more levels of sub-menus.

For example, the graphical user interface has a context manual for convenient dialling of telephone numbers. Each menu item represents a telephone number that is used relatively frequently by the user. A menu item can show a person's or organisation's name and / or the person's or organisation's telephone number. For convenient dialing the user selects one of the telephone numbers from the context menu and enters the selection. In response to the entry of the selection the selected number is called. Likewise email addresses or other communication links can be provided as menu items for convenient user selection.

In accordance with an example the position of the entry pen relative to the surface of the display is sensed by means of electromagnetic coupling. If a user's selection of a certain position on one of the icons has been sensed for a certain predetermined time interval, i.e. the 'tool-tip trigger interval', the tool-tip that is associated with that icon is displayed automatically. Likewise, if the selection of the icon is sensed for a time period that exceeds a predetermined 'tool-tip timeout interval', the display of the tool-tip is discontinued automatically.

The present invention is particularly advantageous for multi-function hand-held electronic appliances such as so-called smart phones that include an electronic organiser and / or other functionalities, such as a digital camera and/or a navigation system. The present invention facilitates a user's intuitive and ergonomic interaction with such complex hand-held electronic appliances.

### Brief description of the drawings

In the following preferred embodiments of the invention will be described in greater detail, by way of example only, making reference to the drawings in which:
- Fig. 1: is a schematic top view of an embodiment of a hand-held electronic appliance of the invention,
- Fig. 2: is a perspective view of a position sensor illustrating electromagnetic coupling between the position sensor and the entry pen,
- Fig. 3: shows the hand-held electronic appliance of Fig. 1 after a user's selection of a menu item,
- Fig. 4: shows a block diagram of a more detailed embodiment of the hand-held electronic appliance,
- Fig. 5: is a flow diagram showing a preferred mode of operation of the hand-held electronic appliance of Fig. 4,
- Fig. 6: is a perspective view showing an embodiment of the configuration of the precision-detecting system of the hand-held electronic appliance of Fig. 4,
- Fig. 7: is a flowchart illustrating an embodiment of the method of the invention.

### Detailed description

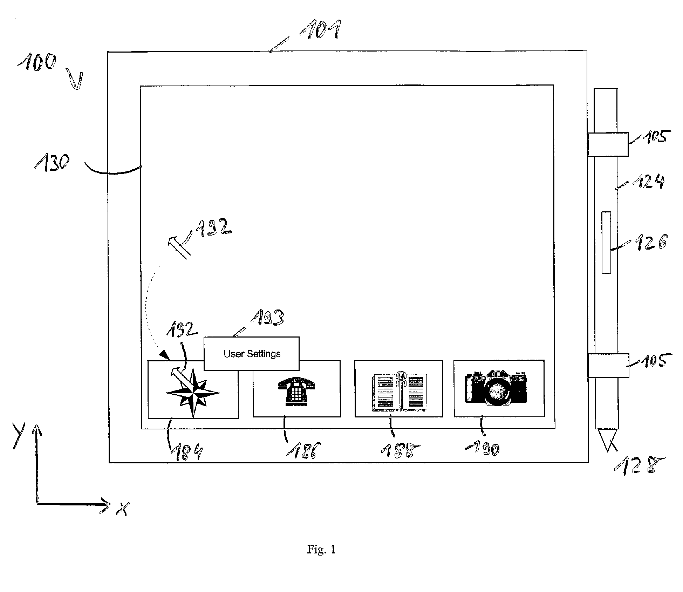

Figure 1 shows a schematic view of the hand-held smartphone 100. The smartphone 100 has about the size of a palm and is battery powered. It has a wireless interface to a digital cellular communication network, such as a GSM, UMTS, CDMA, WLAN or other kind of wireless network or a cordless phone interface, such as a DECT or other cordless interface. By means of the wireless interface a user can make phone calls, send email and / or connect to the Internet. Alternatively or in addition the smartphone 100 has a short range wireless interface such as Bluetooth.

The smartphone 100 has a housing 101; the housing 101 has clips 104 for receiving an entry pen 124. The entry pen 124 has a pen tip 128 and / or a side switch 126.

The entry pen 124 has internal circuitry for generating a signal when the pen tip 128 is depressed and / or when the side switch 126 is operated when the entry pen 124 is in the proximity of the display 130 of the smartphone 100. The entry pen 124 may or may not have a battery for powering its internal circuitry.

Preferably the entry pen 124 includes internal circuitry for electromagnetic coupling with transmission and sensor coils disposed behind the display 130. Electromagnetic coupling has the advantage that the need for a battery within the entry pen 124 can be avoided as the entry pen is powered by the electromagnetic waves it receives from the transmission coils. For example, the entry pen 124 can be designed in accordance with EP0259894B1 or EP0307667B1.

It is to be noted that there are various design options to removably attach the entry pen 124 to the housing 101 of the smartphone 100. As an alternative to external attachment of the entry pen 124 by means of the clips 104, the housing 101 may have a reception hole for receiving the entry pen 124 with clips disposed inside the reception hole.

The smartphone 100 has an operating system that provides a graphical user interface such as the Symbian OS, the Palm OS or the Pocket PC Operating System.

The graphical user interface has an icon 184 for entering and / or viewing of user settings, an icon 186 for selecting communication functionalities, such as making a phone call, sending an email and / or connecting to the Internet, and icon 188 for access to organiser functionalities, such as entering or viewing a task, a calendar entry, and / or an address, and an icon 190 for access to camera functionalities of the built-in digital camera of the smartphone 100. The graphical user interface of the smartphone 100 may include additional or other icons for access to other functionalities, such as access to the functionalities of a built-in GPS navigation system, a digital photo viewer or the like.

In the preferred embodiment considered here the graphical user interface has a cursor 192; the cursor 192 serves as a pointer for a user's graphic selection of one of the icons 184 to 190 or of another graphical element of the graphical user interface displayed on the display 130.

The cursor 192 can be moved by means of the entry pen 124 without a need to contact the surface of the display 130. In other words, the user orients the pen tip 128 to a xy position within the display 130 without a requirement to contact the surface of the display 130. The orientation of the pen tip 128 is sensed by means of the receiver coils disposed behind the display 130 and the respective position information is entered into the processor of the smartphone 100. In response, the cursor 192 is moved to the position to which the pen tip 128 points. Hence, a user can conveniently move the cursor 192 to any position within display 130 by means of entry pen 124 without a need to touch the surface of the display 130 with the pen tip 128.

For example, the user can move the cursor 192 from its initial position onto one of the icons, such as icon 184, as illustrated by the dashed arrow in Fig. 1 by positioning the entry pen 124 correspondingly relative to the display 130. In response, the graphical user interface displays a tool-tip 193 that is associated with the selected icon 184. The tool-tip 193 contains the phrase 'user settings' in order to explain the meaning of the icon 184 to the user. Depending on the implementation, the tool-tip 193 is displayed immediately after the user has moved the cursor 192 onto the icon 184. Alternatively the tool-tip 193 is only displayed after a predefined tool-tip trigger interval of about 0.2 to 0.8 seconds.

Depending on the implementation the tool-tip 193 is displayed as long the cursor 192 is on the icon 184 and as long no user action is entered. Alternatively the display of the tool-tip 193 is discontinued after a predefined tool-tip timeout interval.

Preferably, the tool-tip 193 is displayed automatically after the user has moved the cursor 192 onto the icon 184. Alternatively, the tool-tip 193 is displayed after the user has moved the cursor 192 onto the icon 184 and has performed an additional single user entry action such as depressing the pen tip 128 onto the icon 184 or after the user has operated the side switch 126. In the latter case the tool-tip 193 is only displayed in response to the user's single entry action. This has the advantage that experienced users who are already familiar with the functionalities represented by the various icons of the graphical user interface may decide that display of a tool-tip is not required while an inexperienced user can enter a command by performing the single user entry action which causes display of the tool-tip that is associated with the icon on which the cursor is currently located.

As a further alternative the tool-tip 193 is displayed automatically after the cursor 192 has been moved onto the icon 184. Performing the single user entry action, e.g. depressing the pen tip 128 onto the icon 184 or operating the side switch 126, can cause display of a context menu that is associated with the icon 184 or it invokes a program function that is associated with the icon 184.

This applies analogously to the further icons, such as icons 186, 188 and/or 190, that are shown on the display 130. When the user moves the cursor 192 onto the icon 186 the tool-tip 'telecommunication' or 'phone call' or a similar explanatory text appears on the display 130. If the user moves the cursor 192 onto the icon 188 the tool-tip 'organizer' appears; likewise, if the user moves the cursor 192 onto the icon 190 the tool-tip 'camera' appears. Performing the single user entry action after the cursor 192 has been moved onto one of the icons can cause display of a context menu that is associated with that icon and/or invocation of a functionality that is associated with that icon. For example performing the single user entry action when the cursor 192 is on the icon 186 can cause an automatic telephone call to a predefined telephone number, such as an emergency call, or it can open a context menu for selection of a telephone number to be called.

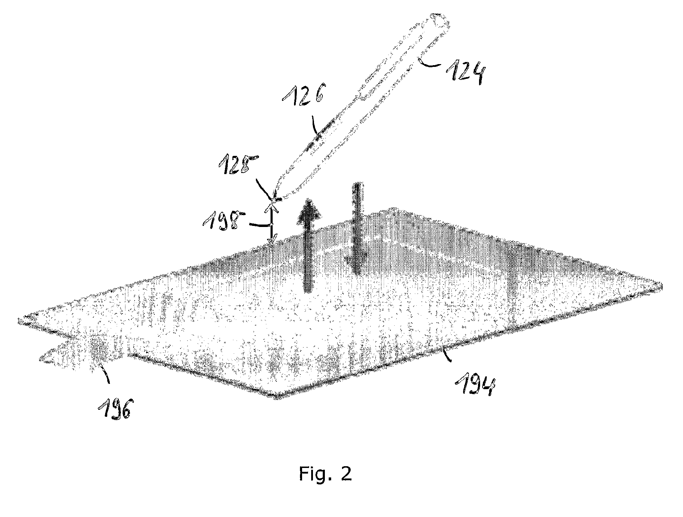

The contactless coupling between the entry pen 124 and the transmission and sensor coils disposed behind the display 130 is schematically illustrated in the perspective view of figure 2.

A printed circuit board 194 is disposed behind the display 130 (cf figure 1) such that it forms an under layer of the display 130. The printed circuit board 194 carries a sensor unit which extends in the plane, including a transmission coil unit for transmission of position detecting signals for detecting the position of the entry pen 124 relative to the display 130. Further, the printed circuit board 194 has a sensor coil unit for receiving position indicating signals indicating the position of the entry pen 124. The sensor coil unit includes a plurality of sensor coils arranged in the x and y directions.

The printed circuit board 194 has a connector 196 for coupling the printed circuit board 194 to an integrated circuit that controls operation of the position sensing and signal exchange with the entry pen 124 and delivers position data and other data such as pen tip up / down information or information indicative of the pen side switch position.

The electromagnetic coupling between the entry pen 124 and the printed circuit board 194 has a certain contactless user range which enables interaction. For example, the electromagnetic coupling between the entry pen 124 and the printed circuit board 194 is sufficiently strong to sense the entry pen position, if the gap 198 between the pen tip 128 and the printed circuit board 194 is below 30mm, preferably below 20mm.

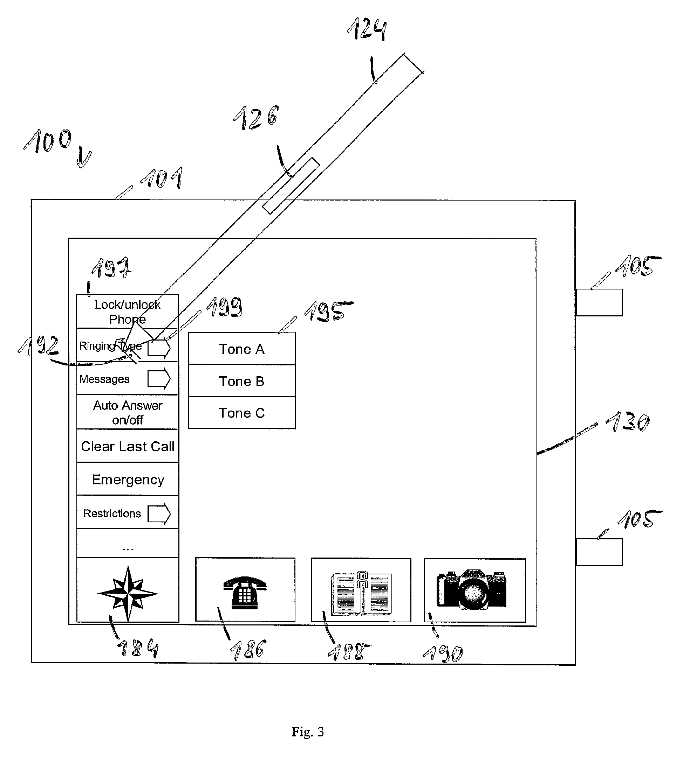

Figure 3 illustrates a user's interaction for selection of a user setting. For entering the user setting the user moves the cursor 192 onto the icon 184 by means of entry pen 124 without a requirement for contacting the surface of the display 130 with the pen tip 128.

After the cursor 192 has been moved onto the icon 184 the tool-tip 193 (cf. Fig. 1) is displayed. In response to the single user entry action, e.g. depressing the pen tip 128 onto the icon 184 or operating the side switch 126, the context menu 197 that is assigned to the icon 184 is displayed on the display 130.

The context menu 197 has a number of menu items, e.g. 'lock / unlock phone' for locking / unlocking the smartphone 100, 'ringing type' for selection of the ringing tone type, 'messages' for reading or deleting a message, 'auto answer on / off' for setting the automatic answer functionality on or off, 'clear last call' for setting the last-called numbers to be cleared or retained when the smartphone 100 is switched off, 'emergency' for setting a key on / off for one-touch dialling of emergency calls, 'restrictions' for setting call restrictions and / or other menu items for viewing and / or changing user settings.

In the example considered here the user desires to change the ringing tone type of the smartphone 100.

For setting the ringing tone type the user moves the cursor 192 from the icon 184 over the context menu 197 onto the menu item 'ringing type'. The menu item 'ringing type' has an assigned sub-menu. The fact that the menu item 'ringing type' has a sub-menu is symbolised by the arrow symbol 199 next to the words 'ringing type' of the respective menu item. Likewise , the menu items 'messages' and 'restrictions' have assigned sub- menus as symbolised by the respective arrow symbols. Preferably a selected menu item and/or sub-menu item is highlighted.

When the cursor 192 is on the menu item 'ringing type' the sub-menu 195 that is assigned to the menu item 'ringing type' is displayed next to the arrow symbol 199. In the example considered here, the sub-menu 195 has menu items 'tone A', 'tone B', and 'tone C' corresponding to respective ringing tone types A, B and C.

For example, if the user wants to select the ringing tone type B, he or she moves the cursor 192 onto the menu item 'tone B' over the sub-menu 195 by means of the entry pen 124 without a need to touch the surface of the display 130. When the cursor 192 is on the menu item 'tone B' the user can perform a user input action in order to enter his or her selection of the menu item 'tone B' for entering the selection of the desired ringing tone type B.

This user input action can be performed by depressing the pen tip 128 onto the menu item 'tone B' when the cursor 192 is positioned on the menu item 'tone B'. Alternatively, the user can operate the side switch 126 of the entry pen 124 in order to enter the selection of ringing tone type B when the cursor 192 is positioned on the menu item 'tone B'. In either case the entry pen 124 generates a signal that is received by the senor coils of the printed circuit board 194 (cf. figure 2). That signal is entered into the microprocessor of the smartphone 100 for entry of the user's selection.

If the user selects a menu item within context menu 197 that has no assigned sub-menu the user can select or de-select the respective setting by performing the single user input action after the cursor 192 has been moved onto the respective menu item. For example, if the user wants to set automatic answer on or off, he or she moves the cursor 192 onto the 'auto answer on / off' menu item and then performs the single user entry action, e.g. depressing the pen tip 128 against the surface of the display 130 or operating the side switch 126.

As icon 184, the other icons 186, 188, and 190 may or may not have assigned respective context menus. Access to the context menus, menu items, and sub-menus, if any, works the same way as explained with respect to the icon 184. It is to be noted that a context menu can have multiple levels of sub-menus.

The present invention is particularly advantageous as it makes a user's interaction with the smartphone 100 more convenient by enabling contactless access to tool-tips, invocation of program functions, selection of context menus, menu items, sub-menus and sub-menu items. In addition to the increased convenience, the contactless selection of menu items has ergonomic advantages. In particular the invention reduces the risk of repetitive strain injury when the smartphone 100 is used frequently.

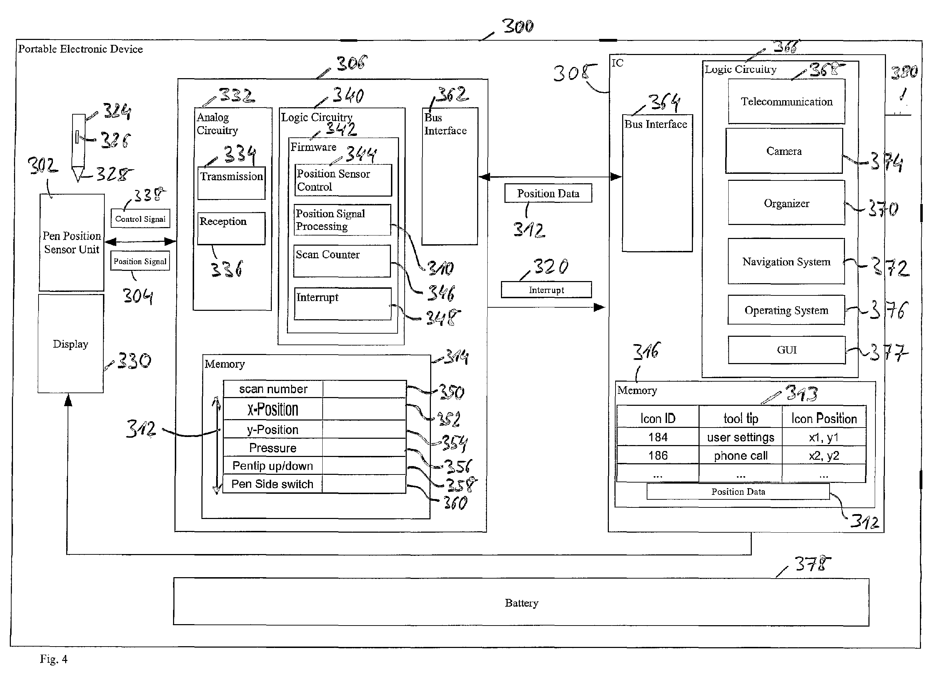

Figure 4 shows a block diagram of a more detailed embodiment of a portable hand-held electronic appliance 300. For example, the electronic appliance 300 is an implementation of the smartphone 100 (cf. figures 1, 2 and 3). Elements of the electronic appliance 300 that correspond to elements of the smartphone 100 are designated by like reference numerals.

The electronic appliance 300 has a position sensor 302 for sensing the position of an entry pen 324. The position sensor 302 can be implemented as a printed circuit board (cf. printed circuit board 194 shown in figure 2). The position sensor 302 is located behind the display 330 for sensing a position of the entry pen 324 relative to the display and for receiving user entry signals from the entry pen 324. The entry pen 324 has a side switch 326 that can be operated by a user and a pen tip 328. The display 330 can be a liquid crystal display or an organic light emitting diode (OLED) display or another kind of display.

The position sensor senses the position of the entry pen 324 relative to the display 330 by electromagnetic coupling. In addition to the position detection, the position sensor 302 can receive a user entry signal from the entry pen 324. A user entry signal is an electromagnetic signal that is emitted from the entry pen 324 in order to indicate a switch position of the side switch 326 and / or whether the pen tip 328 is depressed or not.

The electronic appliance 300 has an integrated circuit 306 for controlling operation of the position sensor 302 and for processing position signals received from the position sensor 302. The integrated circuit 306 has analogue circuitry 332 that comprises a transmission component 334 and a reception component 336. The transmission component 334 and the reception component 336 serve to generate control signals 338 for controlling the transmission of electromagnetic signals from the position sensor 302 to the entry pen 324 and the reception of electromagnetic signals from the entry pen 324 by the position sensor 302. The resultant position signal 304 that carries the position information is received by the reception component 336 which provides the sampled position signal 304 to the position signal processing component 310.

The position signal processing component 310 belongs to logic circuitry 340 of the integrated circuit 306. In the preferred embodiment considered here, the position signal processing component 310 is provided by a set of instructions of the firmware 342 which is executed by logic circuitry 340.

In addition, the firmware 342 has a position sensor control component 344 which is a set of firmware instructions for controlling overall operation of the position sensor 302 and the analogue circuitry 332. Further, the firmware 342 has a generator component 346 which is a set of firmware instructions for generating an identifier for each position dataset that is provided by the position signal processing component 310. The interrupt component 348 is a set of firmware instructions for generating an interrupt 320 when a new acquisition scan of the position data is performed.

Further, the integrated circuit 306 has a memory 314. The memory 314 has a predefined memory location 350 for storing the identifier of a position dataset. The memory 314 has predefined memory locations 352, 354, 356, 358 and 360. These memory locations 352 to 360 serve for storage of a complete position dataset.

A complete position data set can consist of a sensed x-position and y-position of the entry pen 324, pressure data indicative of the pressure with which the pen tip 328 of the entry pen 324 is depressed against the display 330, a pen tip up / down bit indicating whether the pen tip 328 is depressed against the display 330 or not, and pen side switch information indicating the position of the side switch 326 of the entry pen 324.

The memory location 352 is permanently assigned to the x-position, the memory location 354 is assigned to the y-position, the memory location 356 is assigned to the pressure data, the memory location 358 is assigned to the pen tip up / down bit and the memory location 360 is assigned to the pen side switch information. In other words, the memory 314 has a memory mapped area where each component of a position data set and the identifier of the position data set is always stored on a pre-defined memory location.

The integrated circuit 306 is coupled to an integrated circuit 308 of the electronic appliance 300. The integrated circuit 306 has a bus interface 362 for sending a position dataset 312 and its identifier to the integrated circuit 308. The integrated circuit 308 has a bus interface 364. For example, the bus interfaces 362 and 364 connect the integrated circuits 306 and 308 by means of a data bus such as the SPI, IIC and / or UART data buses.

The integrated circuit 308 has logic circuitry 366 for execution of various program components. For example, the logic circuitry 366 can serve for execution of a program component 368 for providing a telecommunication functionality such as a mobile telephony, email and / or Internet functionality, a program component 370 for providing an electronic organiser functionality, a program component 372 for providing a navigation system, and a program component 374 for providing a digital camera functionality. Further, the logic circuitry 366 serves for execution of a program component 376 that provides an operating system and program component 377 that provides a graphical user interface. The program component 377 may or may not be an integral part of the program component 376.

The integrated circuit 308 has a memory 316 for storing the position dataset 312.

Further, the memory 316 serves for storage of a table 313 that holds icon information for the graphical user interface. For example, the table 330 comprises an icon identifier that unequivocally identifies each icon of the graphical user interface such as icons 184, 186, 188, 190,... and the explanatory text of the respective tool-tips that are associated with these icons. Further the table 330 comprises the icon positions on the display 330. For example, the icon 184 (cf. Fig. 1) is located on position x1, y1 on the display 330 and the icon 186 is located on position x2,y2, etc.

The portable electronic device 300 has a battery 378 for providing power to the various components of the portable electronic device, including the integrated circuit 308. The display 330 is coupled to the integrated circuit 308 for displaying the elements of the graphical user interface provided by the program component 377 and for displaying various information and user data related to one or more of the functionalities provided by the program components 368, 370, 372 and 374. The elements of the graphical user interface include icons to which tool-tips and/or context menus are assigned (cf. icons 184, 186, 188, 190 of figure 1). Preferably, each icon or context menu relates to a single category of functions or menu items.

The electronic appliance 300 can have an integrated antenna 380 for providing a wireless interface to a digital telecommunication network. Likewise, the antenna 380 can be required for providing a navigation functionality such as for reception of global positioning system (GPS) signals.

In operation a user of the electronic appliance 300 can select a menu item by orienting the entry pen 324 towards the menu item. For example, this can be done by moving a cursor provided by the graphical user interface onto the menu item without a need for contacting the surface of the display with the entry pen 324 (cf. figure 3). For performing the single user entry action, the user can operate the side switch 326 and / or press the pen tip 328 against the surface of the display 330. In response, the entry pen 328 sends and electromagnetic signal that is sensed by the sensor coils of the position sensor 302, i.e. pen tip down signal and/or the side switch signal.

The analogue circuitry 332 is controlled by the position sensor control component 344 to provide control signals 338 to the position sensor 302 for acquisition of a position signal 304. The position signal 304 is analogue to digital converted and provided to the position signal processing component 310 in order to extract the position dataset 312 from the digitised position signal 304.

The generator component 346 provides an identifier for the new position dataset 312. In the preferred embodiment considered here, the generator component 346 is implemented as a scan counter which counts the data acquisitions of position datasets 312 performed by the position sensor control component 344. With each position data acquisition scan that is performed by the position sensor 302 under the control of the position sensor control component 344 the scan counter is incremented or decremented depending on the implementation.

The position signal processing component 310 writes the position dataset 312 and the scan number provided by the generator component 346 to the memory mapped area of the memory 314. In other words, the scan number is written to the memory location 350, the x-position data to the memory location 352, the y-position data to the memory location 354, the pressure information to the memory location 356, the pen tip up / down bit to the memory location 358 and the pen side switch information to the memory location 360.

When the scan number and the new position dataset 312 are written to the memory 31 4 the interrupt component 348 is invoked in order to generate and interrupt 320 which is sent from the integrated circuit 308 to the integrated circuit 308.

The interrupt 320 is received by the integrated circuit 308. In response a read operation of the memory mapped area of the memory 314 is performed by the integrated circuit 308 by means of its bus interface 364. For example, the integrated circuit 308 reads the memory mapped area from the memory location 350 to the memory location 360 in sequential order. After these read operations the integrated circuit 308 performs another read operation in order to read the memory location 350 again. If the content of the memory location 350 is the same for both the initial read operation and the read operation after having read the dataset 312, this indicates that the dataset 312 is valid. If the contrary is the case, this indicates that the position signal processing component 310 has performed another write operation of a new position data set while the integrated circuit 308 has attempted to read the previous position dataset 312. In the latter case the integrated circuit 308 re-tries to read the content of the memory mapped area of the memory 314 for reading a consecutive up-to date position dataset 312.

The position dataset 312 is stored in the memory 316 of the integrated circuit 308 for access by the program components 368, 370, 372 and / or 374.

In operation the graphical user interface provided by program component 377 compares the position dataset 312 stored in the memory 316 with the icon positions stored in the table 313. If the position dataset 312 matches one of the icon positions or indicates that the cursor is in close proximity to one of the icon positions, the program component 377 reads the explanatory text that is associated with that icon and displays the corresponding tool-tip on the display 330.

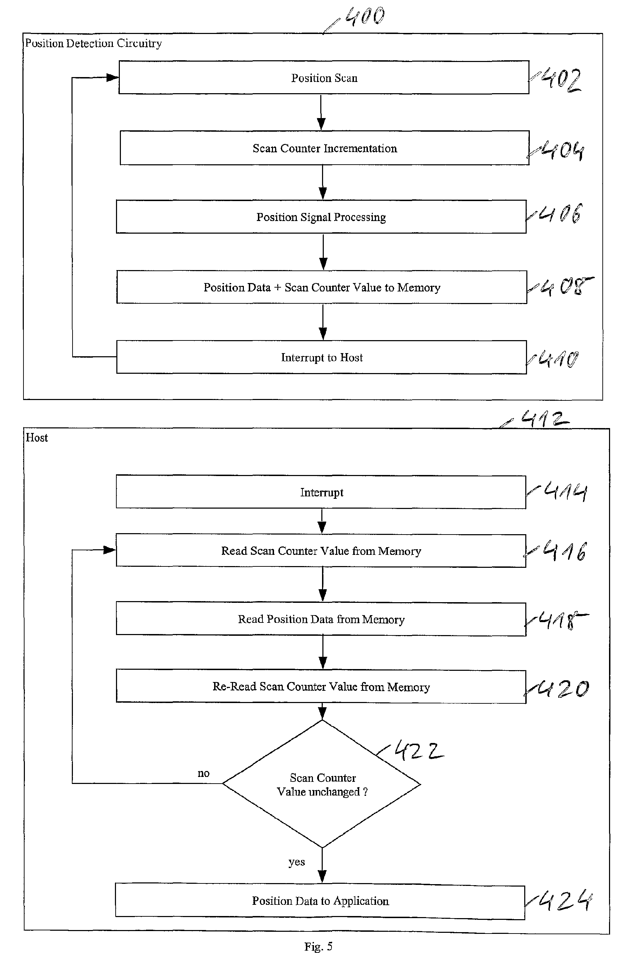

Figure 5 shows a corresponding diagram illustrating the operation of the electronic appliance of figure 4. As shown in figure 5 the operation of the position detection circuitry provided by the position sensor 302/integrated circuit 306 and operation of the host processor provided by the integrated circuit 308 can be independent and asynchronous.

The process 400 performed by the position detection circuitry comprises the following steps:
In step 402 a position scan is performed for acquisition of a position dataset that includes at least x, y position data of the current position of the entry pen with respect to the display in the x, y plane. In step 404 the scan counter is incremented or decremented. The position signal acquired from the position scan performed in step 402 is processed in step 406 which provides the position dataset. The position dataset and the scan counter value are stored in a memory mapped storage region (step 408). Further, an interrupt is sent to the host processor in step 410 in order to signal the availability of up-to-date position data in the memory mapped storage region. From step 410 the control goes back to step 402 for performance of a consecutive position data acquisition.

The process 412 performed by the host processor comprises the following steps:
In step 414 the host processor receives an interrupt from the position detection circuitry (cf. step 410). In response the host processor reads the scan counter value from the memory mapped storage region (416). Next, the host processor reads the position dataset from the memory mapped storage region (step 418). In step 420 the host processor re-reads the scan counter value from the memory mapped storage region.

If the scan counter values that have been read in the steps 416 and 420 are identical, this implies that the position dataset that has been read in step 418 is valid (step 422) and the position dataset is provided to an application for further processing (step 424). If the contrary is the case, this implies that the position dataset was in the process of being overwritten with a new position dataset during the read operation performed in step 418. As a consequence, the control goes back from step 422 to step 416 in order to perform a new read attempt of valid position data from the memory mapped storage region.

The position data indicates a current position of the entry pen with respect to the display of the hand-held electronic appliance. If the graphical user interface provides a cursor icon on the display, the desired position of the cursor icon is given by the position data acquired from the position sensor. In other words, the cursor icon follows the entry pen's movement when the entry pen hovers above the surface of the display.

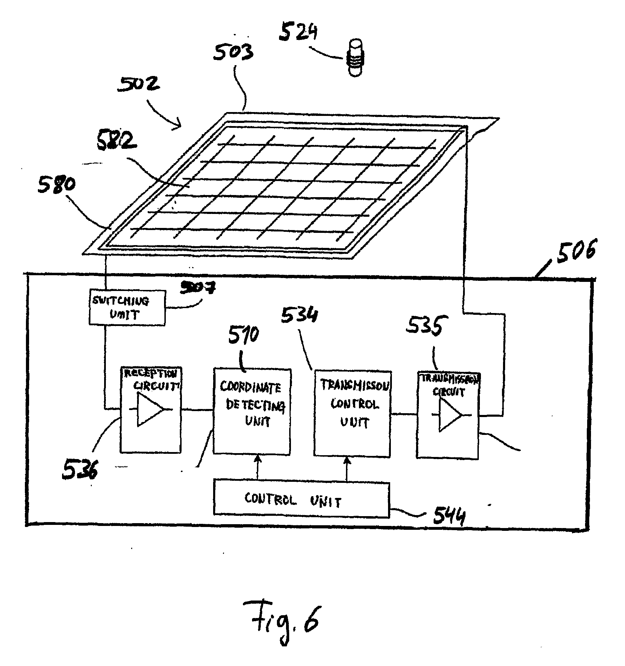

Figure 6 shows an exemplary configuration of the position detecting circuitry that can be used for acquisition of the position data. Elements in the embodiment of figure 6, that correspond to elements in the embodiments of figure 1 to 4 are designated by like reference numerals.

The position detecting system according to the preferred embodiment considered here includes a position indicator 524 for indicating a position and a position detecting apparatus 502 for detecting the position of the position indicator 524.

The position indicator 524 includes at least one coil and indicates a position. For example, the position indicator 524 includes a coil and a capacitor connected to the coil, in which the capacitor and the coil form a resonant circuit. Preferably, the position indicator 524 includes additional circuitry for generating an electromagnetic signal when the user performs a user input action, such as operating the switch of the position indicator 524.

The position detecting apparatus 502 includes a control unit 544, a transmission control unit 534 for generating position detecting signals, a transmission circuit 535, a sensor unit 503 serving as a sensor area, a switching unit 507 for selecting / switching sensor coils, a reception circuit 536 and a coordinate detection unit 510.

The sensor unit 503, which extends in the plane, includes a transmission coil unit 580 for transmitting position detecting signals for detecting the position of the position indicator 524; and a sensor coil unit 582 for receiving position indicating signals indicating the position of the position indicator 524. The sensor coil unit 582 includes a plurality of sensor coils arranged in the x-direction (x-direction sensor coils) and a plurality of sensor coils arranged in the y-direction orthogonal to the x-direction (y-direction sensor coils).

The control unit 544 corresponds to the signal transmitting unit, the receiving unit and the position detecting unit; the transmission control unit 534 and the transmission circuit 535 correspond to the signal transmitting unit; the switching unit 507 and the reception circuit 536 correspond to the receiving unit; and the coordinator detection unit 510 corresponds to the position detection unit.

The control unit 544 controls the position detecting apparatus 502 and also controls the transmission control unit 534, the switching unit 507, the reception circuit 536 and the coordinator detection unit 510.

The transmission control unit 534 generates position detecting signals for detecting a position indicated by the position indicator 524 under the control of the control unit 544. The transmission circuit 535 amplifies the position detecting signals from the transmission control unit 534 and supplies the position detecting signals to the transmission coil unit 580, which is provided in the sensor unit 503. Accordingly, the transmission coil unit is driven. The sensor coils are scanned using the switching unit 507 and the reception unit 536 for position detection by coordinate detection unit 510.

In addition the sensor coils can serve for reception of the electromagnetic signal that is emitted by the position indicator 524 when the user performs the user input action, such as operating a switch of the position indicator 524 (cf. side switch 126, 326 or pen tip 128, 328 cf. Fig. 1, 2, 3, and 4 respectively). The respective user entry signal is provided as part of the position dataset to the host processor (cf. pentip up/down bit or pen side switch information within dataset 312). In response, the graphical user interface signals entry of the graphically selected menu item which causes a respective entry of a user setting or invokes a certain functionality.

The various components that are required for controlling a driving operation of the position sensor 502 are provided by a mixed analogue / digital application specific integrated circuit 506 which has a similar design as the integrated circuit 306 of figure 4. The components of the integrated circuit 506 related to the storage of position data and interfacing with a host processor are not shown in figure 6 for ease of explanation.

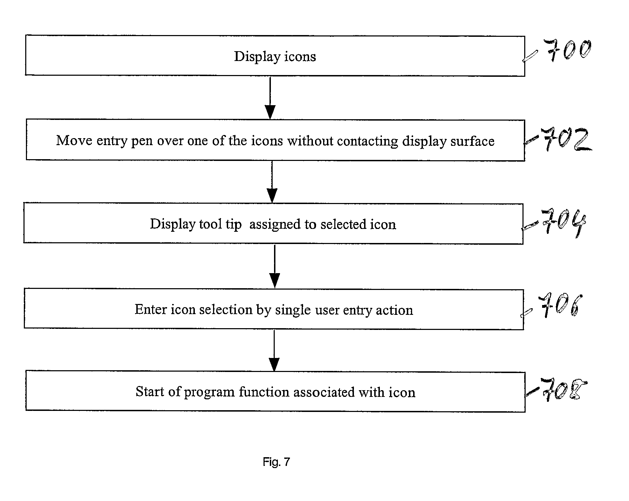

Figure 7 illustrates an embodiment of the method of the invention. In step 700 a number of icons are displayed on the display of a hand-held electronic appliance, such as a smartphone, a PDA, a navigation system, an electronic organiser, a digital camera or another multifunctional hand-held electronic appliance.

Preferably each icon has an assigned tool-tip and/or a context menu that comprises a number of menu items and/or an associated functionality that can be invoked by entry of a selection of the respective icon.

In step 702 the user moves an entry pen over one of the icons with or without contacting the display surface. When the xy position of the entry pen equals or is in close proximity to the xy position of one of the icons, the tool-tip associated with that selected icon is displayed (step 704). In step 706 the selection of the icon is entered by performing a single user entry action. In the preferred embodiment considered here this invokes a program function that is associated with the selected icon, such as making a telephone call, sending an email, connecting to the Internet, opening an electronic calendar, a task list, starting navigation or opening a context menu of a digital camera functionality.

### List of Reference Numerals

- 100: Smartphone
- 101: Housing
- 102: Position Sensor
- 105: Clips
- 124: Entry Pen
- 128: Pen Tip
- 126: Side Switch
- 130: Display
- 184: Icon
- 186: Icon
- 188: Icon
- 190: Icon
- 192: Cursor
- 193: Tool tip
- 194: Printed Circuit Board
- 195: Sub-menu
- 196: Connector
- 197: Context Menu
- 198: Gap
- 199: Arrow Symbol
- 300: Electronic Appliance
- 302: Position Sensor
- 304: Position Signal
- 306: Integrated Circuit
- 308: Integrated Circuit
- 310: Position Signal Processing Component
- 312: Position Dataset
- 313: Table
- 314: Memory
- 316: Memory
- 320: Interrupt
- 324: Entry Pen
- 332: Analogue Circuitry
- 334: Transmission Component
- 336: Reception Component
- 338: Control Signal
- 340: Logic Circuitry
- 342: Firmware
- 344: Position Sensor Control Component
- 346: Generator Component
- 348: Interrupt Component
- 350: Memory Location
- 352: Memory Location
- 354: Memory Location
- 356: Memory Location
- 358: Memory Location
- 360: Memory Location
- 362: Bus Interface
- 364: Bus Interface
- 366: Logic Circuitry
- 368: Program Component
- 370: Program Component
- 372: Program Component
- 374: Program Component
- 376: Program Component
- 377: Program Component
- 378: Battery
- 380: Antenna
- 502: Position Detecting Apparatus
- 503: Sensor Unit
- 506: Integrated Circuit
- 507: Switching Unit
- 510: Coordinate Detection Unit
- 524: Position Indicator
- 534: Transmission Control Unit
- 535: Transmission Circuit
- 536: Reception Circuit
- 544: Control Unit
- 580: Transmission Coil Unit
- 582: Sensor Coil Unit

## Claims

1. A hand-held electronic appliance comprising:
- graphical user interface means (130; 313, 330, 377) for displaying at least one icon (184,186,188,190) having an associated tool-tip (193),
- pen entry means (124, 194,; 302, 306, 324; 502, 524) for contactless selection of the at least one icon,the graphical user interface means being adapted to display the tool-tip in response to the said contactless selection of the at least one icon,the pen entry means having an entry pen (124; 324; 524), the entry pen comprising a user operable input element (128, 126; 326, 328) for entering the selection of the at least one icon, the user operable input element being a switch (126; 326), the entry pen being adapted to send an entry signal in response to operation of the switch in order to signal entry of the selection.

2. The hand-held electronic appliance of claim 1, the graphical user interface means comprising a cursor (192) and the pen entry means being adapted for movement of the cursor onto the at least one icon for the selection of the at least one icon.

3. The hand-held electronic appliance of claim 1 or 2 , the pen entry means comprising an entry pen (124; 324; 524), the entry pen having an entry tip (128; 328), the orientation of the pen tip with respect to a surface of a display (130; 330) of the hand-held electronic appliance determining the selection.

4. The hand-held electronic appliance of any one of the preceding claims, the graphical user interface means comprising a plurality of icons (184, 186, 188, 190) for invoking functions represented by the respective icons, such as a telecommunication function, an organizer function, a digital camera function and/or a navigation function of the hand-held electronic appliance.

5. The hand-held electronic appliance of any one of the preceding claims, the graphical user interface means comprising a plurality of icons (184, 186, 188, 190), each icon representing a context menu (197) and each context menu comprising menu items belonging to a common category.

6. The hand-held electronic appliance of any one of the preceding claims, one of the icons (184) of the graphical user interface means being representative of the category user settings.

7. The hand-held electronic appliance of any one of the preceding claims, one icon (186) of the graphical user interface means being representative of the category communication functions.

8. The hand-held electronic appliance of any one of the preceding claims, one icon (188) of the graphical user interface means being representative of the category organizer functions.

9. The hand-held electronic appliance of any one of the preceding claims, one icon (190) of the graphical user interface means being representative of the category digital camera functions.

10. The hand-held electronic appliance of any one of the preceding claims, one icon of the graphical user interface means being representative of navigation functions.

11. The hand-held electronic appliance of any one of the preceding claims, the graphical user interface means comprising a display (130; 330) and the pen entry means comprising a position sensor (102; 302; 502) for sensing the position of an entry pen relative to the display while the entry pen is in proximity to the display.

12. The hand-held electronic appliance of any one of the preceding claims, the pen entry means comprising a capacitive proximity sensor.

13. The hand-held electronic appliance of any one of the preceding claims, the pen entry means being adapted to sense a position of an entry pen by electromagnetic coupling.

14. The hand-held electronic appliance of claim 13, the graphical user interface means being adapted to display the tool-tip after the position of the entry pen on the at least one icon has been sensed for a first predefined time interval.

15. The hand-held electronic appliance electronic appliance of claim 13 or 15, the graphical user interface being adapted to discontinue displaying of the tool-tip after the position of the entry pen on the at least one icon has been sensed for a second predetermined period of time.

16. The hand-held electronic appliance of any one of the preceding claims being or comprising a mobile phone, a smartphone, a personal digital assistant, a navigation system, a digital camera, and/or a digital photo viewer.

17. A method of displaying a tool-tip (193) on a display of a hand-held electronic appliance, the method comprising:
- displaying at least one icon (184, 186, 188, 190) on the display, the at least one icon having an associated tool-tip (193),
- contactless selection of the at least one icon by means of an entry pen (124; 324; 524),
- displaying the tool-tip in response to the said contactless selection of the at least one icon
- entering the selection of the at least one icon by performing a single user entry action, the single user entry action consisting of operating the switch of the entry pen.

18. The method of claim 17, wherein a communication function, organizer function, digital camera function and/or navigation function is invoked in response to the single user entry action.

19. A computer program product, in particular digital storage medium, comprising computer executable instructions for performing a method in accordance with any one of the preceding claims 18 to 19.

## Patentansprüche

1. Elektronisches Handgerät, umfassend:
- ein grafisches Benutzeroberflächenmittel (130; 313, 330, 377) zum Anzeigen von wenigstens einem Symbol (184, 186, 188, 190), das einen zugeordneten Tooltip (193) hat,
- ein Stifteingabemittel (124; 194; 302, 306, 324; 502, 524) zur kontaktlosen Auswahl des wenigstens einen Symbols, wobei das grafische Benutzeroberflächenmittel zur Anzeige des Tooltips als Reaktion auf die genannte kontaktlose Auswahl des wenigstens einen Symbols ausgeführt ist, wobei das Stifteingabemittel einen Eingabestift (124; 324; 524) hat, wobei der Eingabestift ein vom Benutzer bedienbares Eingabeelement (128, 126; 326, 328) zur Eingabe der Auswahl des wenigstens einen Symbols aufweist, wobei das vom Benutzer bedienbare Eingabeelement ein Schalter (126; 326) ist, wobei der Eingabestift ausgeführt ist zum Senden eines Eingabesignals als Reaktion auf die Bedienung des Schalters, um eine Signaleingabe der Auswahl zu senden.

2. Elektronisches Handgerät nach Anspruch 1, wobei das grafische Benutzeroberflächenmittel einen Cursor (192) aufweist und das Stifteingabemittel zur Bewegung des Cursors auf das wenigstens eine Symbol zur Auswahl des wenigstens einen Symbols ausgeführt ist.

3. Elektronisches Handgerät nach Anspruch 1 oder 2, wobei das Stifteingabemittel einen Eingabestift (124; 324; 524) aufweist, wobei der Eingabestift eine Eingabespitze (128; 328) hat, wobei die Ausrichtung der Stiftspitze in Bezug auf eine Oberfläche einer Anzeige (130; 330) des elektronischen Handgeräts die Auswahl bestimmt.

4. Elektronisches Handgerät nach einem der vorhergehenden Ansprüche, wobei das grafische Benutzeroberflächenmittel mehrere Symbole (184, 186, 188, 190) zum Aufrufen von Funktionen, die von den jeweiligen Symbolen repräsentiert werden, wie etwa einer Telekommunikationsfunktion, einer Organisatorfunktion, einer Digitalkamerafunktion und/oder einer Navigationsfunktion des elektronischen Handgeräts, aufweist.

5. Elektronisches Handgerät nach einem der vorhergehenden Ansprüche, wobei das grafische Benutzeroberflächenmittel mehrere Symbole (184, 186, 188, 190) aufweist, wobei jedes Symbol ein Kontextmenü (197) darstellt und jedes Kontextmenü Menüpunkte aufweist, die zu einer gemeinsamen Kategorie gehören.

6. Elektronisches Handgerät nach einem der vorhergehenden Ansprüche, wobei eines der Symbole (184) des grafischen Benutzeroberflächenmittels für die Kategorie Benutzereinstellungen repräsentativ ist.

7. Elektronisches Handgerät nach einem der vorhergehenden Ansprüche, wobei ein Symbol (186) des grafischen Benutzeroberflächenmittels für die Kategorie Kommunikationsfunktionen repräsentativ ist.

8. Elektronisches Handgerät nach einem der vorhergehenden Ansprüche, wobei ein Symbol (188) des grafischen Benutzeroberflächenmittels für die Kategorie Organisatorfunktionen repräsentativ ist.

9. Elektronisches Handgerät nach einem der vorhergehenden Ansprüche, wobei ein Symbol (190) des grafischen Benutzeroberflächenmittels für die Kategorie Digitalkamerafunktionen repräsentativ ist.

10. Elektronisches Handgerät nach einem der vorhergehenden Ansprüche, wobei ein Symbol des grafischen Benutzeroberflächenmittels für Navigationsfunktionen repräsentativ ist.

11. Elektronisches Handgerät nach einem der vorhergehenden Ansprüche, wobei des grafischen Benutzeroberflächenmittels eine Anzeige (130; 330) aufweist und das Stifteingabemittel einen Positionssensor (102; 302; 502) zum Erfassen der Position eines Eingabestiftes relativ zur Anzeige, während der Eingabestift in der Nähe der Anzeige ist, aufweist.

12. Elektronisches Handgerät nach einem der vorhergehenden Ansprüche, wobei das Stifteingabemittel einen kapazitiven Näherungssensor aufweist.

13. Elektronisches Handgerät nach einem der vorhergehenden Ansprüche, wobei das Stifteingabemittel zum Erfassen einer Position eines Eingabestifts durch elektromagnetische Kopplung ausgeführt ist.

14. Elektronisches Handgerät nach Anspruch 13, wobei das grafische Benutzeroberflächenmittel ausgeführt ist zum Anzeigen des Tooltips, nachdem die Position des Eingabestifts auf dem wenigstens einen Symbol für eine erste vordefinierte Zeitspanne erfasst worden ist.

15. Elektronisches Handgerät nach Anspruch 13 oder 15, wobei das grafische Benutzeroberflächenmittel ausgeführt ist zum Unterbrechen der Anzeige des Tooltips, nachdem die Position des Eingabestifts auf dem wenigstens einen Symbol für eine zweite vorbestimmte Zeitspanne erfasst worden ist.

16. Elektronisches Handgerät nach einem der vorhergehenden Ansprüche, das ein Mobiltelefon, ein Smartphone, einen Personal Digital Assistant, ein Navigationssystem, eine Digitalkamera und/oder ein digitales Bildanzeigegerät ist oder aufweist.

17. Verfahren zum Anzeigen eines Tooltips (193) auf einer Anzeige eines elektronischen Handgeräts, wobei das Verfahren Folgendes umfasst:
- Anzeigen von wenigstens einem Symbol (184, 186, 188, 190) auf der Anzeige, wobei das wenigstens eine Symbol einen zugeordneten Tooltip (193) hat,
- kontaktloses Auswählen des wenigstens einen Symbols mithilfe eines Eingabestiftes (124; 324; 524),
- Anzeigen des Tooltips als Reaktion auf die genannte kontaktlose Auswahl des wenigstens einen Symbols,
- Eingeben der Auswahl des wenigstens einen Symbols durch Durchführen einer einzelnen Benutzereingabehandlung, wobei die einzelne Benutzereingabehandlung aus der Bedienung eines Schalters des Eingabestiftes besteht.

18. Verfahren nach Anspruch 17, wobei als Reaktion auf die einzelne Benutzereingabehandlung eine Telekommunikationsfunktion, eine Organisatorfunktion, eine Digitalkamerafunktion und/oder eine Navigationsfunktion aufgerufen wird.

19. Computerprogrammprodukt, speziell ein digitales Speichermedium, das computerausführbare Anweisungen zum Durchführen eines Verfahrens nach einem der vorhergehenden Ansprüche 18 bis 19 aufweist.

## Revendications

1. Appareil électronique à main comprenant :
- un moyen d'interface d'utilisateur graphique (130 ; 313, 330, 377) pour l'affichage d'au moins une icône (184, 186, 188, 190) comportant une pointe d'outil (193) associée,
- un moyen d'entrée de stylo (124, 194 ; 302, 306, 324 ; 502, 524) pour une sélection sans contact de l'au moins une icône, le moyen d'interface d'utilisateur graphique étant adapté pour afficher la pointe d'outil en réponse à ladite sélection sans contact de l'au moins une icône, le moyen d'entrée de stylo comportant un stylo d'entrée (124 ; 324 ; 524), le stylo d'entrée comprenant un élément d'entrée (128, 126 ; 326, 328) actionnable par un utilisateur, pour entrer la sélection de l'au moins une icône, l'élément d'entrée actionnable par un utilisateur étant un interrupteur (126 ; 326), le stylo d'entrée étant adapté pour envoyer un signal d'entrée en réponse à l'actionnement de l'interrupteur afin de signaler l'entrée de la sélection.

2. Appareil électronique à main selon la revendication 1, dans lequel le moyen d'interface d'utilisateur graphique comprend un curseur (192) et le moyen d'entrée de stylo est adapté pour déplacer le curseur sur l'au moins une icône pour la sélection de l'au moins une icône.

3. Appareil électronique à main selon la revendication 1 ou 2, dans lequel le moyen d'entrée de stylo comprend un stylo d'entrée (124 ; 324 ; 524), le stylo d'entrée comportant une pointe d'entrée (128 ; 328), dans lequel l'orientation de la pointe de stylo par rapport à une surface d'un écran (130 ; 330) de l'appareil électronique à main détermine la sélection.

4. Appareil électronique à main selon l'une quelconque des revendications précédentes, dans lequel le moyen d'interface d'utilisateur graphique comprend une pluralité d'icônes (184, 186, 188, 190) pour invoquer des fonctions représentées par les icônes respectives, telles qu'une fonction de télécommunication, une fonction d'organisation, une fonction d'appareil photo numérique et/ou une fonction de navigation de l'appareil électronique à main.

5. Appareil électronique à main selon l'une quelconque des revendications précédentes, dans lequel le moyen d'interface d'utilisateur graphique comprend une pluralité d'icônes (184, 186, 188, 190), chaque icône représentant un menu contextuel (197) et chaque menu contextuel comprenant des éléments de menu appartenant à un catégorie commune.

6. Appareil électronique à main selon l'une quelconque des revendications précédentes, dans lequel l'une des icônes (184) du moyen d'interface d'utilisateur graphique est représentative de la catégorie réglages d'utilisateur.

7. Appareil électronique à main selon l'une quelconque des revendications précédentes, dans lequel une icône (186) du moyen d'interface d'utilisateur graphique est représentative des fonctions de la catégorie communication.

8. Appareil électronique à main selon l'une quelconque des revendications précédentes, dans lequel une icône (188) du moyen d'interface d'utilisateur graphique est représentative des fonctions de la catégorie organisation.

9. Appareil électronique à main selon l'une quelconque des revendications précédentes, dans lequel une icône (190) du moyen d'interface d'utilisateur graphique est représentative des fonctions de la catégorie appareil photo numérique.

10. Appareil électronique à main selon l'une quelconque des revendications précédentes, dans lequel une icône du moyen d'interface d'utilisateur graphique est représentative des fonctions de navigation.

11. Appareil électronique à main selon l'une quelconque des revendications précédentes, dans lequel le moyen d'interface d'utilisateur graphique comprend un écran (130 ; 330) et le moyen d'entrée de stylo comprend un capteur de position (102 ; 302 ; 502) pour détecter la position d'un stylo d'entrée par rapport à l'écran pendant que le stylo d'entrée se trouve à proximité de l'écran.

12. Appareil électronique à main selon l'une quelconque des revendications précédentes, dans lequel le moyen d'entrée de stylo comprend un capteur de proximité capacitif.

13. Appareil électronique à main selon l'une quelconque des revendications précédentes, dans lequel le moyen d'entrée de stylo est adapté pour détecter une position d'un stylo d'entrée par couplage électromagnétique.

14. Appareil électronique à main selon la revendication 13, dans lequel le moyen d'interface d'utilisateur graphique est adapté pour afficher la pointe d'outil une fois que la position du stylo d'entrée sur l'au moins une icône a été détectée pour un premier intervalle de temps prédéfini.

15. Appareil électronique à main selon la revendication 13 ou 15, dans lequel l'interface d'utilisateur graphique est adaptée pour interrompre l'affichage de la pointe d'outil une fois que la position du stylo d'entrée sur l'au moins une icône a été détectée pour une deuxième période de temps prédéfinie.

16. Appareil électronique à main selon l'une quelconque des revendications précédentes, ledit appareil étant ou comprenant un téléphone mobile, un smartphone, un assistant numérique personnel, un système de navigation, un appareil photo numérique et/ou une visionneuse de photos numériques.

17. Procédé pour l'affichage d'une pointe d'outil (193) sur un écran d'un appareil électronique à main, le procédé comprenant :
- l'affichage d'au moins une icône (184, 186, 188, 190) sur l'écran, l'au moins une icône présentant une pointe d'outil (193) associée,
- la sélection sans contact de l'au moins une icône à l'aide d'un stylo d'entrée (124 ; 324 ; 524),
- l'affichage de la pointe d'outil en réponse à ladite sélection sans contact de l'au moins une icône,
- l'entrée de la sélection de l'au moins une icône par l'exécution d'une action d'entrée d'utilisateur unique, l'action d'entrée d'utilisateur unique consistant en l'actionnement de l'interrupteur du stylo d'entrée.

18. Procédé selon la revendication 17, dans lequel une fonction de communication, une fonction d'organisation, une fonction d'appareil photo numérique et/ou une fonction de navigation est invoquée en réponse à l'action d'entrée d'utilisateur unique.

19. Produit de programme informatique, en particulier un support de stockage numérique, comprenant des instructions exécutables par ordinateur pour la mise en oeuvre d'un procédé selon l'une quelconque des revendications précédentes 18 à 19.
